**Europäisches Patentamt**

**European Patent Office**

**Office européen des brevets**

(19)

(11) Veröffentlichungsnummer: **0 170 221**
**B1**

(12) # EUROPÄISCHE PATENTSCHRIFT

(45) Veröffentlichungstag der Patentschrift:
20.05.87

(21) Anmeldenummer: **85109385.6**

(22) Anmeldetag: **26.07.85**

(51) Int. Cl.⁴: **B 65 G 1/04**

(54) **Automatische Aus- und Einlagerungseinrichtung für Blechpakete.**

(30) Priorität: **31.07.84 DE 3428229**

(43) Veröffentlichungstag der Anmeldung:
**05.02.86 Patentblatt 86/6**

(45) Bekanntmachung des Hinweises auf die Patenterteilung:
**20.05.87 Patentblatt 87/21**

(84) Benannte Vertragsstaaten:
**AT CH DE FR GB IT LI NL SE**

(56) Entgegenhaltungen:
**EP-A-0 111 848**

(73) Patentinhaber: **Siemens Aktiengesellschaft Berlin und München, Wittelsbacherplatz 2, D-8000 München 2 (DE)**

(72) Erfinder: **Huber, Karlheinz, Nibelungenring 39, D-8933 Untermeitingen (DE)**
Erfinder: **Häfner, Wilhelm, Auenweg 6, D-8900 Augsburg 22 (DE)**

EP 0 170 221 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine automatische Aus- und Einlagerungseinrichtung für Blechpakete.

Eine derartige Einrichtung ist aus der EP-A-0 111 848 bekannt.

Zum Stapeln von Blechpaketen ist es sonst üblich, diese manuell auszupacken und mit Hilfe eines Gabelstapels in ein hierfür vorgesehenes Regal einzulagern. Dieses Verfahren ist jedoch umständlich und sehr zeitaufwendig.

Aufgabe der vorliegenden Erfindung ist es daher, eine automatische Aus- bzw- Einlagerungseinrichtung für Blechpakete zu schaffen.

Die automatische Aus- und Einlagerungseinrichtung für Blechpakete wird gemäß der Erfindung derart ausgebildet, daß ein Auflagetisch vorgesehen ist, der an den Tischrändern angeordnete Auflageflächen für eine erste Art von Paletten und innerhalb der Tischflächen gleichmäßig verteilte, in zwei parallelen Reihen angeordnete vertikal ausfahrbare Stempel zum Abheben des Blechpaketes von der ersten Art von Paletten aufweist, daß hinter dem Auflagetisch eine Ein- bzw. Auslagerstation vorgesehen ist, die ebenfalls tischartig ausgebildet und mit Auflageflächen für eine zweite Art von Paletten versehen ist, daß ein automatisch gesteuertes Handhabungsgerät vorgesehen ist, das magnetisch oder mechanisch angetriebene Greifer zum Befördern des Brechtaketes vom Auflagetisch zur Ein- bzw. Auslagerstation aufweist, daß hinter der Ein- bzw. Auslagerstation ein Regal vorgesehen ist, an dessen Frontseite ein mit vertikal und horizontal bewegbaren Förderarmen ausgestattetes, automatisch gesteuertes Regalförderfahrzeug zum Be- und Entladen der Ein- bzw. Auslagerstation bzw. des Regals auf decken- und bodenseitig angeordneten Schienen entlang fahrbar ist.

Durch diese Maßnahmen erhält man den Vorteil, daß das langwierige manuelle Auspacken mit anschließendem Ein- bzw. Ausladen durch Gabelstapler entfällt.

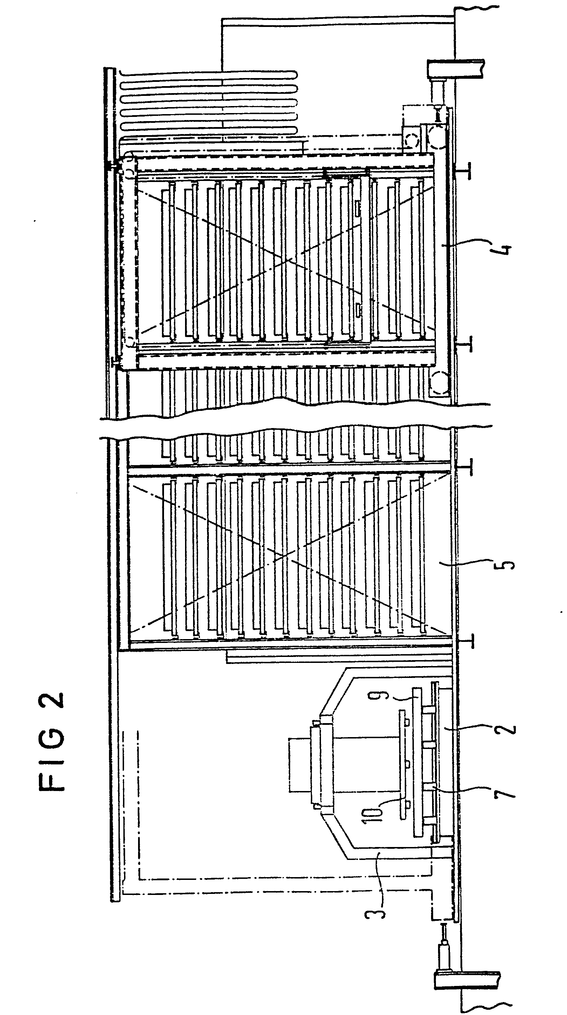

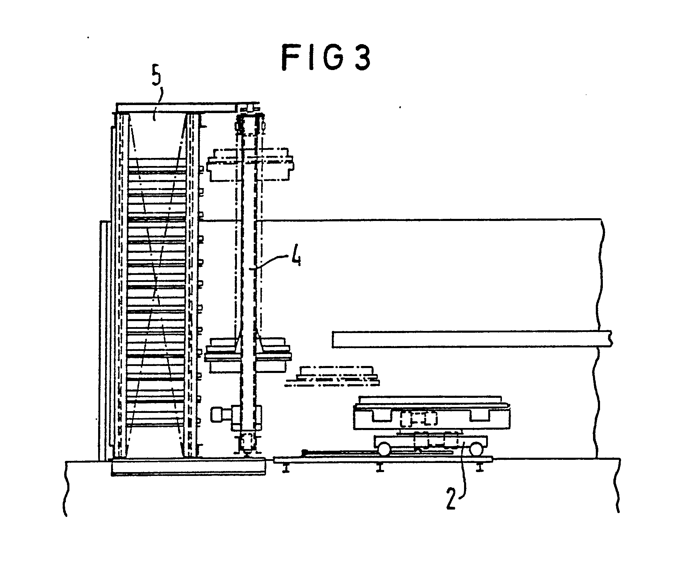

Anhand der FIG 1 bis 3 wird die Erfindung näher erläutert. Es zeigen:

FIG 1 eine Draufsicht,

FIG 2 eine Vorderansicht,

FIG 3 eine Seitenansicht der Ein- und Auslagerungseinrichtung.

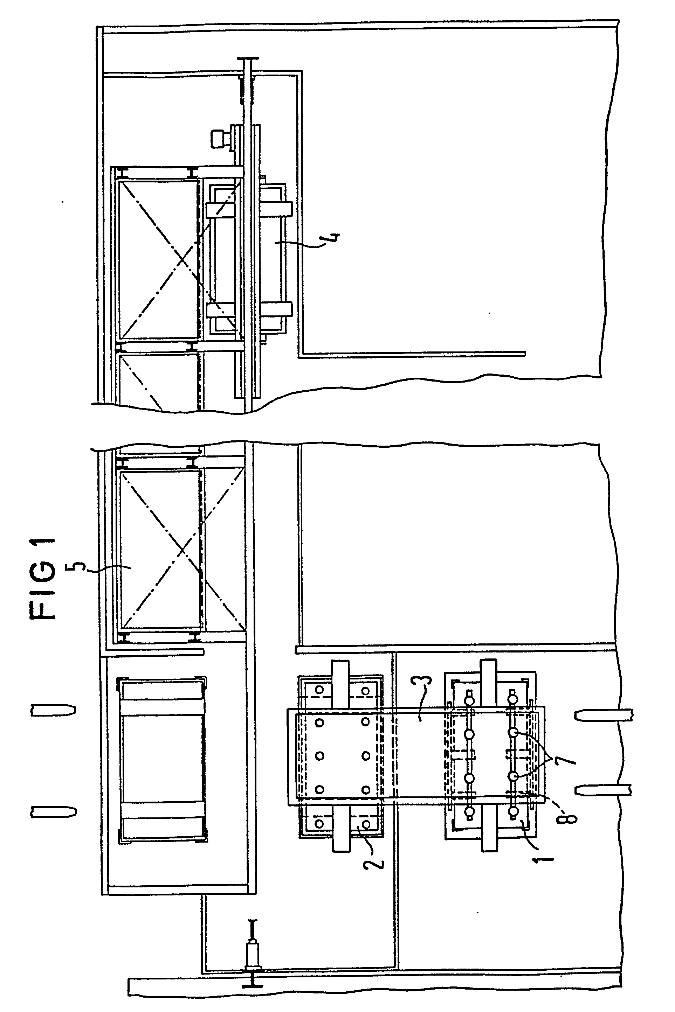

Die Blechpakete, die beispielsweise auf einer Holzpalette gelagert sind, werden von einem Gabelstapler, wie in FIG 1 gezeigt, auf den Auflagetisch 1 abgelegt. Der Auflagetisch 1 ist so ausgebildet, daß er Auflageflächen 8 enthält, auf denen die Holzpalette aufliegt. In der Mitte des Auflagetisches 1 sind Stempel 7 in zwei parallelen Reihen angeordnet, mit Hilfe derer das Blechpaket 9 von der Holzpalette abgehoben wird.

Hinter dem Auflagetisch 1 befindet sich die Ein- und Auslagerstation 2. Sowohl der Auflagetisch 1 wie die Ein- und Auslagerstation 2 werden von einem Handhabungssystem 3 bedient. Es weist magnetische oder mechanisch angetriebene Greifer 10 auf, die das Blechpaket 9 auf dem Auflagetisch 1 untergreifen und es auf eine Spezialpalette, die für die Einlagerung in das Regal 3 geeignet ist, auf der Ein- bzw. Ausladerstation 2 ablegen. Dieses so mit der Spezialpalette vereinigte Blechpaket wird dann von einem Regalförderfahrzeug 4, das an der Vorderfront des Regals 3 auf boden- und deckenseitigen Schienen fahrbar angeordnet ist und vertikal und horizontal verstellbare Förderarme enthält, von der Aus- bzw- Einlagerungsstation 2 abgehoben und in die von einem Programm vorgegebene Regallage des Regals 3 eingestapelt.

## Patentansprüche

1. Automatische Aus- und Einlagerungseinrichtung für Blechpakete, <u>dadurch gekennzeichnet</u>, daß ein Auflagetisch (1) vorgesehen ist, der an den Tischrändern angeordnete Auflageflächen (6) für eine erste Art von Paletten und innerhalb der Tischflächen gleichmäßig verteilte, in zwei parallelen Reihen angeordnete vertikal ausfahrbare Stempel (7) zum Abheben des Blechpaketes (9) von der ersten Art von Paletten aufweist, daß hinter dem Auflagetisch (1) eine Einbzw. Auslagerstation (2) vorgesehen ist, die ebenfalls tischartig ausgebildet und mit Auflageflächen für eine zweite Art von Paletten versehen ist, daß ein automatisch gesteuertes Handhabungsgerät (3) vorgesehen ist, das magnetisch oder mechanisch angetriebene Greifer (10) zum Befördern des Blechpaketes (9) vom Auflagetisch (1) zur Ein- bzw. Auslagerstation (2) besitzt, daß hinter der Ein- bzw. Auslagerstation (2) ein Regel (3) vorgesehen ist, an dessen Frontseite ein mit vertikal und horizontal bewegbaren Förderarmen ausgestattetes, automatisch gesteuertes Regalförderfahrzeug (4) zum Be- und Entladen der Ein- bzw. Auslagerstation (2) bzw. des Regals (3) auf decken- und bodenseitig angeordneten Schienen entlang, fahrbar ist.

## Claim

1. A device for automatically removing and storing stacks of sheet metal, <u>characterised in that</u> a supporting table (1) is provided, which has supporting surfaces (8), arranged at the table edges, for pallets of a first type, and which is provided with vertically extensible rams (7) which are arranged spaced in the table surfaces in two uniformly parallel rows, and serve to lift the stack of sheet metal (9) from the pallets of the first type, that a storage and removal station (2) is arranged behind the supporting table (1), which station is likewise in the form of a table and is provided with supporting surfaces for pallets of a second type, that an automatically controlled handling device (3) is provided which is equipped with magnetic or mechanically driven grippers (10) which serve to convey the stack (9) of sheet metal from the supporting table (1) to the storage and removal station (2), that behind the storage and removal station (2) a shelf (5) is provided, at the front side of which an automatically controlled shelf conveyor vehicle (4), which is equipped with vertically and horizontally mobile conveyor arms and which serves to load and unload the storage and removal station (2) and the shelf (5), is movable along rails arranged at the top and at the bottom.

**Revendication**

1. Dispositif automatique de déstockage et de stockage pour des paquets de tôles, caractérisé par le fait qu'il est prévu une table de support (1), qui comporte des surfaces d'appui (6) disposées au niveau des bords de la table, pour un premier type de palettes, et des vérins (7) répartis uniformément sur la surface de la table, disposés suivant deux rangées et pouvant être déployés verticalement, pour soulever le paquet de tôles (9) du premier type de palettes, qu'en arrière de la table de support (1) se trouve disposé un poste de stockage ou de déstockage (2) qui est également formé à la manière d'une table et comporte des surfaces de support pour un second type de palettes, qu'il est prévu un appareil de manipulation (9) à commande automatique, qui possède des organes de préhension (10) entraînés magnétiquement ou mécaniquement et servant à déplacer le paquet de tôles (9) depuis la table de support (1) jusqu'au poste de stockage ou de déstockage (2), qu'en arrière du poste de stockage ou de déstockage (2), il est prévu un rayonnage (5), devant la face avant duquel un transélévateur (4) à commande automatique, équipé de bras d'entraînement déplaçables verticalement et horizontalement et servant à charger et à décharger le poste de stockage et de déstockage (2) ou le rayonnage (5), est déplaçable sur des rails disposés au plafond et au sol.

# FIG 1

# FIG 2

# FIG 3